# EUROPÄISCHE PATENTSCHRIFT

(11) **EP 0 973 807 B1**
(45) Veröffentlichungstag und Bekanntmachung des Hinweises auf die Patenterteilung: **20.09.2000**
(21) Anmeldenummer: 98924197.1
(22) Anmeldetag: 24.04.1998
(51) Int. Cl.: C08F 2/24, C09D 157/00, C09J 157/00

(54) **VERFAHREN ZUR HERSTELLUNG VON WÄSSRIGEN POLYMERDISPERSIONEN**
METHOD FOR PRODUCING AQUEOUS POLYMER DISPERSIONS
PROCEDE DE PRODUCTION DE DISPERSIONS POLYMERES AQUEUSES

(30) Priorität: 30.04.1997 DE 19718289
(43) Veröffentlichungstag der Anmeldung: 26.01.2000
(73) Patentinhaber: Wacker-Chemie GmbH, 81737 München (DE)
(72) Erfinder: WEITZEL, Hans-Peter, D-84571 Reischach (DE); FIGGE, Reiner, D-84539 Ampfing (DE)
(74) Vertreter: Schuderer, Michael, Dr.
(86) Internationale Anmeldenummer: EP9802436
(87) Internationale Veröffentlichungsnummer: WO9849205

(56) Entgegenhaltungen:
- EP-A- 0 655 464
- EP-A- 0 727 441
- DE-A- 2 515 109

## Beschreibung

Die Erfindung betrifft ein Verfahren zur Herstellung von wässrigen Polymerdispersionen sowie deren Verwendung zur Herstellung von in Wasser redispergierbaren Polymerpulvern.

Schutzkolloid-stabilisierte, wässrige Polymerdispersionen, beispielsweise für die Anwendung im Bausektor, sind bekannt. Um die Stabilität der wässrigen Polymerdispersionen zu gewährleisten, werden bei der Polymerisation in wässrigem Medium Schutzkolloide wie Polyvinylalkohol, Polyvinylpyrrolidon, Cellulose oder Stärke eingesetzt. Aus der EP-A 133899 (US-A 4532295) sind stärkestabilisierte Polymerdispersion bekannt. In der WO-A 84/00369 (US-A 4528315) und der EP-B 62106 (US-A 4397968) werden mit Polyvinylalkohol stabilisierte Dispersionen beschrieben.

Der Zusatz von Schutzkolloiden, welche zur Sicherstellung einer ausreichenden Stabilität in deutlichen Mengen eingesetzt werden müssen, bringt aber auch Nachteile mit sich: Schutzkolloide sind relativ teuer, durch deren Zusatz wird der Bindemittelgehalt der Dispersion reduziert, es resultieren rheologische Nachteile und schließlich macht der Zusatz von Schutzkolloiden die mit der Dispersion hergestellten Polymerfilme wasseranfällig. Insbesondere die Wasseranfälligkeit ist in vielen Anwendungen im Bausektor und Coatingsektor unerwünscht und muss durch nachträgliche Formulierungsschritte behoben werden. Besonders nachteilig ist die Wasserlabilität in hoch kunststoffgefüllten, zementären Anwendungen wie Dichtschlämmen.

Zur Verbesserung der Wasserbeständigkeit von Polymerfilmen, welche mit schutzkolloidstabilisierten Polymerdispersionen hergestellt wurden, wird in der EP-A 727441 empfohlen, wasserlösliche Schutzkolloide auf der Basis von 5 bis 50 % Säure- bzw. Säureanhydrid-funktionellen Comonomeren, 0.1 bis 80 % langkettigen (Meth)acrylsäureestern und bis zu 94.9 % an wasserunlöslichen Hauptmonomeren, beispielsweise (Meth)acrylate oder Vinylester, einzusetzen. Nachteilig ist, dass diese Schutzkolloide durch Polymerisation in organischen Lösungsmitteln hergestellt werden und das Lösungsmittel aufwendig mittels Destillation abgetrennt werden muss.

Die DE-A 2618898 (US-A 3965032) beschreibt Schutzkolloide auf der Basis von Mischpolymerisat-Polyelektrolyten mit nichtionischen hydrophoben Einheiten, beispielsweise Methylmethacrylat, und hydrophilen Einheiten, beispielsweise ethylenisch ungesättigte mit Sulfonatgruppen substituierte Comonomere, deren Herstellung durch Polymerisation in organischen Lösungsmitteln erfolgt. Diese Schutzkolloide weisen dieselben Nachteile wie die der eben genannten EP-A 727441 auf.

Aus der nachveröffentlichten DE-A 19608911 sind vernetzbare Schutzkolloide mit sulfonathaltigen, N-Methylol-haltigen und hydrophoben Monomereinheiten bekannt. Nachteilig ist, dass mit derartigen Schutzkolloiden stabilisierte Polymerisate bei der Anwendung im Sauren oder bei thermischer Belastung vernetzen und damit verspröden. Dies läuft den in vielen Anwendungen (Dichtungsschlämme, Dichtungsmassen, rissüberbrückende Farben) geforderten elastischen Eigenschaften zuwider.

Die EP-B 206814 beschreibt die Verwendung von Terpolymeren aus (Meth)acrylsäure, Sulfonat-funktionellem Monomeren und Vinylester zur Stabilisierung von wässrigen Systemen, wie Kühlwasser oder Heizkesselwasser, welche gelöste oder suspendierte Feststoffe enthalten.

Aus der EP-A 671435 ist bekannt, dass sich Copolymere aus Alkylacrylaten und Sulfonat- oder Carboxylat-substituierten Monomeren als Verdüsungsmittel zur Verdüsung von Schutzkolloidsatbilisierten Dispersionen eignen. Die EP-A 629650 (US-A 5462978) beschreibt Copolymere aus Sulfonsäure-funktionellen Comonomeren und wasserunlöslichen Comonomeren als Sprühhilfsmittel bei der Sprühtrocknung von wässrigen Polymerisatdispersionen.

Der Erfindung lag die Aufgabe zugrunde, Schutzkolloid-stabilisierte, wässrige Polymerdispersionen zur Verfügung zu stellen, welche sich gegenüber vorbekannten, beispielsweise mit Polyvinylalkohol stabilisierten, Polymerdispersionen durch verbesserte Wasserbeständigkeit bei der Anwendung im Baubereich oder Coatingbereich auszeichnen.

Gegenstand der Erfindung ist ein Verfahren zur Herstellung von Schutzkolloid-stabilisierten wässrigen Polymerdispersionen durch radikalische Polymerisation von ethylenisch ungesättigten Monomeren nach dem Emulsionspolymerisationsverfahren, dadurch gekennzeichnet, dass die Polymerisation in Gegenwart eines oder mehrerer Schutzkolloide durchgeführt wird, enthaltend
a) 20 bis 95 Gew% Sulfonsäure- oder Sulfonatgruppenhaltige Monomereinheiten,
b) 5 bis 80 Gew% Amid- oder Hydroxyalkylgruppenhaltige Monomereinheiten,
c) 0 bis 5 Gew% hydrophobe Monomereinheiten aus der Gruppe der wasserunlöslichen, ethylenisch ungesättigten Verbindungen, wobei die Anteile in Gew% auf das Gesamtgewicht des Copolymerisats bezogen sind.

Geeignete Monomereinheiten a) sind wasserlösliche, radikalisch polymerisierbare, ethylenisch ungesättigte Verbindungen, die Sulfonsäure- bzw. Sulfonatgruppen -SO₃M, mit M = H, Alkali-, Ammonium- oder Erdalkaliion enthalten. Bevorzugt werden 2-Acrylamido-2-methylpropansulfonsäure (AMPS), Styrolsulfonsäure, (Meth-)Acrylsäure-Sulfoalkylester, Itaconsäure-Sulfoalkylester, vorzugsweise jeweils mit C₁- bis C₆-Alkylrest, Vinylsulfonsäure und deren Ammonium-, Alkali- oder Erdalkalisalze. Besonders bevorzugt werden 2-Acrylamido-2-methylpropansulfonsäure (AMPS), Styrolsulfonsäure, Acrylsäuresulfopropylester, Itaconsäuresulfopropylester, Vinylsulfonsäure und deren Ammonium-, Natrium-, Kalium- und Calciumsalze.

Bevorzugte Monomereinheiten b) sind wasserlösliche, radikalisch polymerisierbare, ethylenisch ungesättigte Verbindungen, welche Amidgruppen -CONH₂ oder welche Hydroxygruppen enthalten. Besonders bevorzugt werden Hydroxyalkyl(meth)acrylate wie Hydroxyethylacrylat oder Hydroxypropylacrylat, Hydroxybutylacrylat, Acrylamid und Methacrylamid. Am meisten bevorzugt werden Acrylamid und Methacrylamid.

Wasserlöslich bedeutet dabei generell, dass die Löslichkeit in Wasser bei 23°C mindestens 10 Gew% beträgt.

Geeignete Monomereinheiten c) sind radikalisch (co-)polymerisierbare, ethylenisch ungesättigte Verbindungen, die bei 23°C mit weniger als 4 Gew% in Wasser löslich sind. Bevorzugt werden Ester der Acrylsäure oder Methacrylsäure mit Alkoholen mit 1 bis 18 C-Atomen, wie Methylmethacrylat, Methylacrylat, n-Butylacrylat, 2-Ethylhexylacrylat; Vinylaromaten wie Styrol oder Vinyltoluol; Olefine wie Ethylen, Propylen oder Butadien; Vinylhalogenide wie Vinylchlorid; Vinylester von aliphatischen Carbonsäuren mit 1 bis 18 C-Atomen wie Vinylacetat, Vinylpropionat, Isopropenylacetat, Vinyllaurat, Vinylester von alpha-verzweigten Monocarbonsäuren mit 5 bis 11 C-Atomen wie VeoVa9^{R} oder VeoVa10^{R}.

Bevorzugt werden als Schutzkolloide solche mit
a) 20 bis 95 Gew% Sulfonsäure- oder Sulfonatgruppenhaltige Monomereinheiten, und
b) 5 bis 80 Gew% Amidgruppenhaltige Monomereinheiten, wobei die Anteile in Gew% jeweils auf das Gesamtgewicht des Copolymerisats bezogen sind.

Besonders bevorzugt werden als Schutzkolloide solche mit
a) 40 bis 60 Gew% Monomereinheiten, welche sich von einem oder mehreren Monomeren aus der Gruppe 2-Acrylamido-2-methylpropansulfonsäure, Styrolsulfonsäure, (Meth-)Acrylsäure-Sulfoalkylester, Itaconsäure-Sulfoalkylester, vorzugsweise jeweils mit C₁- bis C₆-Alkylrest, Vinylsulfonsäure und deren Salze ableiten, und
b) 40 bis 60 Gew% Monomereinheiten, welche sich von Acrylamid und/oder Methacrylamid ableiten.

Die Herstellung der Schutzkolloide erfolgt vorzugsweise durch radikalische Polymerisation in wässriger Lösung bei einer Reaktionstemperatur von vorzugsweise 40°C bis 80°C. Die Initiierung erfolgt mittels der gebräuchlichen wasserlöslichen Radikalbildner, die vorzugsweise in Mengen von 0.01 bis 3.0 Gew%, bezogen auf das Gesamtgewicht der Monomeren, eingesetzt werden. Beispiele hierfür sind Ammonium- und Kaliumpersulfat, Wasserstoffperoxid, Kalium-, Natrium- und Ammoniumperoxodiphosphat. Gegebenenfalls können die genannten radikalischen Initiatoren auch in bekannter Weise mit 0.01 bis 1.0 Gew%, bezogen auf das Gesamtgewicht der Monomeren, Reduktionsmittel kombiniert werden. Geeignet sind zum Beispiel Alkali-Formaldehydsulfoxylate und Ascorbinsäure. Zur Molekulargewichtseinstellung können bei der Polymerisation die üblicherweise verwendeten Regler, zum Beispiel Mercaptane, Aldehyde und Chlorkohlenwasserstoffe zugesetzt werden. Die Copolymerisate werden vorzugsweise in Form deren wässrigen Lösungen verwendet. Je nach Anwendungen werden vorzugsweise Festgehalte von 15 bis 25 Gew% eingestellt.

Das erfindungsgemäße Verfahren eignet sich zur radikalischen Polymerisation von ethylenisch ungesättigten Monomeren, beispielsweise von Vinylestern von unverzweigten oder verzweigten Carbonsäuren mit 1 bis 18 C-Atomen, Estern von Acrylsäure und Methacrylsäure mit unverzweigten oder verzweigten Alkoholen mit 1 bis 18 C-Atomen, Vinylaromaten, Vinylhalogeniden und Olefinen.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 oder 9 bis 11 C-Atomen, beispielsweise VV5^{R}, VeoVa9^{R} oder VeoVa10^{R}. Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat, 2-Ethylhexylmethacrylat. Besonders bevorzugt sind Methylacrylat, Methylmethacrylat, n-Butylacrylat und 2-Ethylhexylacrylat.

Bevorzugte Vinylaromaten sind Styrol, alpha-Methylstyrol, ortho-Chlorstyrol oder Vinyltoluole. Bevorzugte Vinylhalogenide sind Vinylchlorid und Vinylidenchlorid. Bevorzugte Olefine sind Ethylen, Propylen, 1,3-Butadien, Isopren.

Gegebenenfalls können noch 0.05 bis 30.0 Gew%, vorzugsweise 0.5 bis 15 Gew%, jeweils bezogen auf das Gesamtgewicht der Monomeren, ein oder mehrere Hilfsmonomere beispielsweise zur Vernetzung oder zur Modifikation der Haftungseigenschaften der erfindungsgemäß hergestellten Polymerisate zugegeben werden. Vernetzend wirkende Monomere werden vorzugsweise zu 0.5 bis 5.0 Gew%, bezogen auf das Gesamtgewicht der Monomere, eingesetzt. Beispiele hierfür sind N-Methylolacrylamid, N-(Alkoxymethyl)acrylamide oder N-(Alkoxymethyl)methacrylamide mit einem C₁- bis C₆-Alkylrest wie N-(isobutoxymethyl)-acrylamid (IBMA), N-(n-butoxymethyl)-acrylamid (NBMA); mehrfach ethylenisch ungesättigten Comonomere wie Ethylenglycoldiacrylat, Divinyladipat, Divinylbenzol, Diallylphthalat oder Triallylcyanurat. Zur Modifikation der Haftungseigenschaften geeignete Comonomereinheiten sind beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bei der erfindungsgemäßen Verfahrensweise erfolgt die Herstellung der wässrigen Polymerdispersionen nach dem Verfahren der wässrigen Emulsionspolymerisation in Gegenwart von 1 bis 20 Gew%, vorzugsweise 5 bis 10 Gew%, eines oder mehrerer der genannten Schutzkolloide, jeweils bezogen auf das Gesamtgewicht der Monomere.

Die Polymerisationstemperatur beträgt in der Regel 35°C bis 95°C, bevorzugt 40°C bis 80°C. Die Polymerisation kann im Batchverfahren, wobei alle Komponenten im Reaktor vorgelegt werden, und im Dosierverfahren, wobei einzelne oder mehrere Komponenten während der Polymerisation zugeführt werden, durchgeführt werden. Mischtypen mit Vorlage und Dosierung werden bevorzugt. Die Dosierungen können separat (räumlich und zeitlich) durchgeführt werden oder die zu dosierenden Komponenten können alle oder teilweise voremulgiert dosiert werden.

Die Schutzkolloide können vorgelegt oder dosiert, oder auf Vorlage und Dosierung verteilt werden. Bevorzugt werden die Schutzkolloide, in Form deren wässrigen Lösungen, vorgelegt.

Sollen beispielsweise gasförmige Reaktionskomponenten eingesetzt werden, kann die Emulsionspolymerisation auch unter erhöhtem Druck durchgeführt werden. Wird unter Druck gearbeitet, zum Beispiel beim Einsatz der Monomeren Vinylchlorid oder Ethylen, sind Drücke von 5 bar bis 100 bar bevorzugt. Entscheidend ist beispielsweise die Zielmenge an Ethylen, die einpolymerisiert werden soll.

Die erfindungsgemäß zu verwendenden Schutzkolloide können sowohl allein als auch in Kombination mit Emulgatoren eingesetzt werden. Als begleitende Emulgatoren kommen anionische und nichtionische Emulgatoren in Betracht. Falls in Gegenwart von Emulgatoren polymerisiert wird, beträgt deren Menge vorzugsweise bis zu 4 Gew%, bezogen auf das Gesamtgewicht der Monomerphase. Vorzugsweise werden anionische und nichtionische Emulgatoren eingesetzt. Gebräuchliche Emulgatoren sind beispielsweise ethoxylierte Fettalkohole mit C₈-C₃₆-Alkylrest und einem Ethoxylierungsgrad (EO-Grad) von 3 bis 50; ethoxylierte Mono-, Di- und Trialkylphenole mit C₄-C₁₀-Alkylrest und einem EO-Grad von 3 bis 50; Alkalimetallsalzen von Di-C₄-C₁₂-Alkylestern der Sulfobernsteinsäure. Geeignet sind auch Alkalimetall- und Ammoniumsalze von C₈-C₁₂-Alkylsulfaten, von ethoxylierten Alkanolen mit C₁₂-C₁₈-Alkylrest und einem EO-Grad von 3 bis 30, von ethoxylierten C₄-C₁₀-Alkylphenolen mit einem EO-Grad von 3 bis 50, von C₁₂-C₁₈-Alkylsulfonsäuren, von C₉-C₁₈-Alkylarylsulfonsäuren und von Sulfonaten ethoxylierter, linearer und verzweigter C₈-C₃₆-Alkylalkohole mit einem EO-Grad von 3 bis 50. In der am meisten bevorzugten Ausführungsform wird ohne Emulgatorzusatz polymerisiert.

Die Initierung der Polymerisation erfolgt mit den für die Emulsionspolymerisation gebräuchlichen wasserlöslichen, thermischen Initiatoren oder Redox-Initiator-Kombinationen. Beispiele für thermische Initiatoren sind organische Peroxide wie tert.-Butylhydroperoxid, Cumylhydroperoxid, oder Persulfate wie Kaliumpersulfat, oder H₂O₂ oder Azoverbindungen wie Azodiisobutyronitril. Als Redox-Initiatoren verwendet man bevorzugt Wasserstoffperoxid, tert.-Butylhydroperoxid oder Kaliumpersulfat in Kombination mit Hydroxymethansulfinsäure, Ascorbinsäure oder Natriumsulfit als Reduktionsmittel. Die Initiatormenge beträgt vorzugsweise 0.01 bis 1.0 Gew%, bezogen auf das Gesamtgewicht der Monomerphase.

Zur Steuerung des Molekulargewichts können während der Polymerisation regelnde Substanzen eingesetzt werden. Sie werden üblicherweise in Mengen zwischen 0.01 bis 5.0 Gew%, bezogen auf die zu polymerisierenden Monomeren, eingesetzt und separat oder auch vorgemischt mit Reaktionskomponenten dosiert. Beispiele solcher Substanzen sind Dodecylmercaptan, Mercaptopropionsäure, Mercaptopropionsäuremethylester, Isopropanol und Acetaldehyd.

Die mit dem erfindungsgemäßen Verfahren erhältlichen wäßrigen Dispersionen haben einen Feststoffgehalt von 30 bis 75 Gew%, vorzugsweise von 40 bis 65 Gew%.

Die Schutzkolloid-stabilisierten, wässrigen Polymerdispersionen eignen sich auch zur Herstellung von in Wasser redispergierbaren Polymerpulvern. Dazu werden die wässrigen Dispersionen getrocknet. Vorzugsweise werden die Dispersionen sprühgetrocknet oder gefriergetrocknet. Am meisten bevorzugt ist die Sprühtrocknung der Dispersionen.

Zur Gewährleistung der Redispergierbarkeit ist es erforderlich der Dispersion vor der Trocknung weitere wasserlösliche Schutzkolloide, welche von den zur Polymerisation eingesetzten Sulfonsäure- bzw. Sulfonat-funktionellen verschieden sind, als Verdüsungshilfe zuzugeben. Als Beispiel für solche Substanzen, die vielfach handelsüblich sind, seien genannt: Polyvinylalkohole, Polyvinylpyrrolidon, Cellulosederivate, Stärkederivate, wasserlösliche Kondensationsprodukte aus Melamin und Formaldehyd, aus Naphthalinsulfonsäure und Formaldehyd. Bevorzugt werden Polyvinylalkohole. In der Regel wird die Verdüsungshilfe in einer Menge von 5 bis 25 Gew%, bezogen auf die polymeren Bestandteile der Dispersion, eingesetzt.

Bei der Verdüsung hat sich vielfach ein Gehalt von bis zu 1.5 Gew% Antischaummittel, bezogen auf das Basispolymerisat, als günstig erwiesen. Zur Erhöhung der Lagerfähigkeit durch Verbesserung der Verblockungsstabilität, insbesonders bei Pulvern mit niedriger Glasübergangstemperatur, kann das erhaltene Pulver mit einem Antiblockmittel (Antibackmittel), vorzugsweise bis 30 Gew%, bezogen auf das Gesamtgewicht polymerer Bestandteile, versetzt werden.

Überraschenderweise führen die so erhaltenen Dispersionspulver beispielsweise bei der Modifizierung von hydraulisch abbindenden Baustoffmassen, trotz deren Redispergierbarkeit, zu Produkten mit verbesserter Wasserfestigkeit im Vergleich zu herkömmlichen Dispersionspulvern.

Die Schutzkolloid-stabilisierten Polymerdispersionen und die daraus erhältlichen Dispersionspulver eignen sich als Bindemittel für Beschichtungen, Putze und Anstriche, insbesondere Anstrichfarben; als Klebstoffe oder Bindemittel für Holz, Papier, Textilien und Nonwovens; als Bindemittel bei der Papierherstellung und zur Herstellung von Preßmassen und Formkörper; als Bindemittel zur Verwendung in der Bauindustrie, insbesonders als Zusätze zu Beton, Bauklebern, Mörteln, Spachtelmassen und Verlaufsmassen.

Die nachfolgenden Beispiel dienen der weiteren Erläuterung der Erfindung.

### Herstellung der Schutzkolloide:

### Beispiel 1:

In einem Polymerisationsgefäß mit 15 Liter Volumen, Rührer und Zuläufen für vier Dosierungen wurden 2600 g Wasser, 40 g 50 %-ige Essigsäure und 53 g 10 %-ige NaOH vorgelegt und auf 60°C erwärmt. Die Drehzahl betrug 180 Upm. Nach Erreichen der Reaktionsbedingungen wurden 630 g 20 %-ige wässrige Natriumpersulfatlösung und 630 g 10 %-ige wässrige Ascorbinsäurelösung mit je 245 g/h gestartet. Nach 5 Minuten wurde die Monomerdosierung aus 2610 g 50 %-ige wässrige AMPS-Lösung, 7260 g 18 %-ige wässrige Methacrylamid-Lösung, 53 g Styrol und 200 g 10 %-ige NaOH mit 5060 g/h gestartet. Gleichzeitig wurde die Reglerdosierung aus 133 g Aceton und 40 g Laurylmercaptan mit 86.6 g/h gestartet. Beide Dosierungen liefen 120 Minuten. Die Innentemperatur wurde so geregelt, dass eine Reaktionstemperatur von 60°C beibehalten wurde. Nach Ende der Monomerdosierung wurde der Initiator noch 30 Minuten weiter dosiert. Das Aceton wurde durch Anlegen eines leichten Vakuums abdestilliert. Danach wurde der Ansatz gekühlt und abgefüllt.

Man erhielt ein wässriges Polymerisat mit einem Polymergehalt von 21.5 %, einer Viskosität von 40 mPas (Brookfield BF20, 23°C) und einem pH-Wert von 4.5. Der K-Wert betrug 40.

### Beispiel 2:

In einem Polymerisationsgefäß mit 3 Liter Volumen, Rührer und Zuläufen für vier Dosierungen wurden 334 g Wasser, 5.5 g 50 %-ige Essigsäure und 7.3 g 10 %-ige NaOH vorgelegt und auf 60°C erwärmt. Die Drehzahl betrug 180 Upm. Nach Erreichen der Reaktionsbedingungen wurden 87 g 20 %-ige wässrige Natriumpersulfatlösung und 87 g 10 %-ige wässrige Ascorbinsäurelösung mit je 55 g/h gestartet. Nach 5 Minuten wurde die Monomerdosierung aus 365 g 50 %-ige wässrige AMPS-Lösung, 1010 g 18 %-ige wässrige Methacrylamid-Lösung und 27.3 g 10 %-ige NaOH mit 1400 g/h gestartet. Gleichzeitig wurde die Reglerdosierung aus 18.2 g Aceton und 5.5 g Laurylmercaptan mit 23.7 g/h gestartet. Beide Dosierungen liefen 60 Minuten. Die Innentemperatur wurde so geregelt, dass eine Reaktionstemperatur von 60°C beibehalten wurde. Nach Ende der Monomerdosierung wurde der Initiator noch 30 Minuten weiter dosiert. Das Aceton wurde durch Anlegen eines leichten Vakuums abdestilliert. Danach wurde der Ansatz gekühlt und abgefüllt. Man erhielt ein wässriges Polymerisat mit einem Polymergehalt von 21.6 %, einer Viskosität von 25 mPas (Brookfield BF20, 23°C) und einem pH-Wert von 3.8. Der K-Wert betrug 28.

### Beispiel 3:

In einem Polymerisationsgefäß mit 3 Liter Volumen, Rührer und Zuläufen für vier Dosierungen wurden 545 g Wasser, 5.5 g 50 %-ige Essigsäure und 7.3 g 10 %-ige NaOH vorgelegt und auf 60°C erwärmt. Die Drehzahl betrug 300 Upm. Nach Erreichen der Reaktionsbedingungen wurden 87 g 20 %-ige wässrige Natriumpersulfatlösung und 87 g 10 %-ige wässrige Ascorbinsäurelösung mit je 34 g/h gestartet. Nach 5 Minuten wurde die Monomerdosierung aus 295 g 50 %-ige wässrige AMPS-Lösung, 818 g 18 %-ige wässrige Methacrylamid-Lösung, 73.7 g Methacrylsäure und 27.3 g 10 %-ige NaOH mit 607 g/h gestartet. Gleichzeitig wurde die Reglerdosierung aus 18.4 g Aceton und 5.5 g Laurylmercaptan mit 12 g/h gestartet. Beide Dosierungen liefen 60 Minuten. Die Innentemperatur wurde so geregelt, dass eine Reaktionstemperatur von 60°C beibehalten wurde. Nach Ende der Monomerdosierung wurde der Initiator noch 30 Minuten weiter dosiert. Das Aceton wurde durch Anlegen eines leichten Vakuums abdestilliert. Danach wurde der Ansatz gekühlt und abgefüllt.
Man erhielt ein wässriges Polymerisat mit einem Polymergehalt von 21.9 %, einer Viskosität von 27 mPas (Brookfield BF20, 23°C) und einem pH-Wert von 4.5. Der K-Wert betrug 26.

### Herstellung der Schutzkolloid-stabilisierten Dispersionen:

### Beispiel 4:

In einem Autoklaven mit 15 Liter Volumen, Rührer und Zuläufen für drei Dosierungen sowie Ethylenversorgung wurden 4600 g Wasser, 2000 g des Schutzkolloids aus Beispiel 2 sowie 3650 g Vinylacetat vorgelegt und auf 65°C erwärmt. Die Drehzahl betrug 300 Upm. Anschließend wurden 64 bar Ethylen aufgedrückt und die Ethylenversorgung geschlossen. Nach Erreichen der Reaktionsbedingungen wurden 380 g 3 %-ige wässrige Kaliumpersulfat-Lösung und 380 g 1.5 %-ige wässrige Brüggolit-Lösung mit je 60 g/h dosiert. 45 Minuten nach Start wurde die Initiatordosierung auf 90 g/h erhöht. Nach 80 Minuten wurden 1620 g Vinylacetat mit 700 g/h zudosiert. Die Innentemperatur wurde so geregelt, dass eine Reaktionstemperatur von 65°C beibehalten wurde. Der Druck wurde bis zum Erreichen der gewünschten Ethylenmenge auf 75 bar gehalten. Nach Ende der Monomerdosierung wurde der Initiator noch 1 h weiter dosiert. Danach wurde der Ansatz gekühlt und ab 60°C in einen geeigneten Kessel entspannt, wodurch überschüssiges Ethylen in das Abgassystem entsorgt wurde. Zur Restmonomerreduzierung wurden 40 g t-Butylhydroperoxid (10 %-ig) und 40 g Brüggolit (10 %-ig) zugegeben und 1 h gerührt. Anschließend wurde die Dispersion durch Zugabe von 15 g Hydorol W (Handelsprodukt Biochema Schwaben) konserviert und über ein 0.5 µm-Sieb abgefüllt. Man erhielt eine Dispersion mit einem Polymergehalt von 50.3 %, einer Viskosität von 50 mPas (Brookfield BF20, 23°C) und einem pH-Wert von 3.0. Die dynamische Glastemperatur betrug - 14°C. Die Bestimmung der Teilchengrößenverteilung mittels Coulter LS230 ergab ein Dw von 830 nm.

### Beispiel 5:

In einem Autoklaven mit 5 Liter Volumen, Rührer und Zuläufen für drei Dosierungen sowie Ethylenversorgung wurden 1500 g Wasser, 653 g einer 21.5 %-igen wässrigen Lösung des Schutzkolloids aus Beispiel 1 sowie 1190 g Vinylacetat vorgelegt und auf 65°C erwärmt. Die Drehzahl betrug 300 Upm. Anschließend wurden 64 bar Ethylen aufgedrückt und die Ethylenversorgung geschlossen. Nach Erreichen der Reaktionsbedingungen wurden 150 g 3 %-ige wässrige Kaliumpersulfat-Lösung und 150 g 1.5 %-ige wässrige Brüggolit-Lösung mit je 30 g/h dosiert. Nach 60 Minuten wurden 530 g Vinylacetat mit 264 g/h zudosiert. Die Innentemperatur wurde so geregelt, dass eine Reaktionstemperatur von 65°C beibehalten wurde. Der Druck wurde bis zum Erreichen der gewünschten Ethylenmenge auf 75 bar gehalten. Nach Ende der Monomerdosierung wurde der Initiator noch 1 h weiter dosiert. Danach wurde der Ansatz gekühlt und ab 60°C in einen geeigneten Kessel entspannt, wodurch überschüssiges Ethylen in das Abgassystem entsorgt wurde. Zur Restmonomerreduzierung wurden 13 g t-Butylhydroperoxid (10 %-ig) und 13 g Brüggolit (10 %-ig) zugegeben und 1 h gerührt. Anschließend wurde die Dispersion durch Zugabe von 3 g Hydorol W (Handelsprodukt Biochema Schwaben) konserviert und über ein 0.5 µm-Sieb abgefüllt.
Man erhielt eine Dispersion mit einem Polymergehalt von 51.3 %, einer Viskosität von 70 mPas (Brookfield BF20, 23°C) und einem pH-Wert von 3.1. Die dynamische Glastemperatur betrug -9°C. Die Bestimmung der Teilchengrößenverteilung mittels Coulter LS230 ergab ein Dw von 850 nm.

### Beispiel 6:

In einem Autoklaven mit 3 Liter Volumen, Rührer und Zuläufen für drei Dosierungen wurden 405 g Wasser, 411 g einer 21 %-i-gen wässrigen Lösung des Schutzkolloids aus Beispiel 2 sowie 24 g Styrol und 24 g Butylacrylat vorgelegt und auf 75°C erwärmt. Die Drehzahl betrug 220 Upm. Nach Erreichen der Reaktionsbedingungen wurden 155 g 3 %-ige wässrige Kaliumpersulfat-Lösung und 155 g 1.5 %-ige wässrige Brüggolit-Lösung mit je 50 g/h dosiert. Nach 5 Minuten wurden 455 g Styrol und 455 g Butylacrylat mit 303 g/h zudosiert. Die Innentemperatur wurde so geregelt, dass eine Reaktionstemperatur von 75°C beibehalten wurde. Nach Ende der Monomerdosierung wurde der Initiator noch 2 h weiter dosiert. Danach wurde der Ansatz gekühlt. Zur Restmonomerreduzierung wurden 4.2 g t-Butylhydroperoxid (10 %-ig) und 4.2 g Brüggolit (10 %-ig) zugegeben und 1 h gerührt. Anschließend wurde die Dispersion durch Zugabe von 3 g Hydorol W (Handelsprodukt Biochema Schwaben) konserviert und über ein 0.5 µm-Sieb abgefüllt.
Man erhielt eine Dispersion mit einem Polymergehalt von 43.1 %, einer Viskosität von 50 mPas (Brookfield BF20, 23°C) und einem pH-Wert von 2.4. Die dynamische Glastemperatur betrug 19°C. Die Bestimmung der Teilchengrößenverteilung mittels Coulter LS230 ergab ein Dw von 340 nm.

### Beispiel 7:

In einem Autoklaven mit 5 Liter Volumen, Rührer und Zuläufen für drei Dosierungen sowie Ethylenversorgung wurden 1340 g Wasser, 705 g einer 21 %-igen wässrigen Lösung des Schutzkolloids aus Beispiel 3 sowie 1300 g Vinylacetat vorgelegt und auf 65°C erwärmt. Die Drehzahl betrug 300 Upm. Nach Erreichen der Reaktionsbedingungen wurden 245 g 3 %-ige wässrige Kaliumpersulfat-Lösung und 245 g 1.5 %-ige wässrige Brüggolit-Lösung mit je 30 g/h dosiert. Nach 60 Minuten wurden 575 g Vinylacetat mit 230 g/h zudosiert. Die Innentemperatur wurde so geregelt, dass eine Reaktionstemperatur von 65°C beibehalten wurde. Der Druck wurde ab 70 Minuten nach Reaktionsbeginn bis zum Monomerdosierende auf 75 bar gehalten. Nach Ende der Monomerdosierung wurde der Initiator noch 2 h weiter dosiert. Danach wurde der Ansatz gekühlt und ab 60°C in einen geeigneten Kessel entspannt, wodurch überschüssiges Ethylen in das Abgassystem entsorgt wurde. Zur Restmonomerreduzierung wurden 12 g t-Butylhydroperoxid (10 %-ig) und 12 g Brüggolit (10 %-ig) zugegeben und 1 h gerührt. Anschließend wurde die Dispersion durch Zugabe von 3 g Hydorol W (Handelsprodukt Biochema Schwaben) konserviert und über ein 0.5 µm-Sieb abgefüllt.
Man erhielt eine Dispersion mit einem Polymergehalt von 50.5 %, einer Viskosität von 30 mPas (Brookfield BF20, 23°C) und einem pH-Wert von 5.7. Die dynamische Glastemperatur betrug -8°C. Die Bestimmung der Teilchengrößenverteilung mittels Coulter LS230 ergab ein Dw von 920 nm.

Zur Beurteilung der Wasserbeständigkeit der mit dem erfindungsgemäßen Verfahren erhältlichen Dispersionspolymerisate wurde die Beständigkeit der damit erhältlichen Polymerfilme und die Beständigkeit von Trockenmörtel-Zusammensetzungen, welche mit den Dispersionspolymerisaten modifiziert wurden, getestet:

### Wasserbeständigkeit des Polymerfilms:

Auf einer Glasplatte wurde mit Hilfe eines Rakels ein Dispersionsfilm mit einer Naßschichtstärke von 500 µm aufgezogen. Der Film wurde dann 24 h bei 60°C getrocknet. Zur Überprüfung der Wasserfestigkeit wurde mittels einer Pipette ein Wassertropfen auf den Film aufgesetzt. Nach 60 sec wurde der Wassertropfen auf dem Film verrieben und die Wasserbeständigkeit visuell beurteilt. Je höher die Wasserbeständigkeit, desto geringer die Dispergierung des Films in Wasser. Die Wasserbeständigkeit wurde mit folgendem Benotungsschema qualitativ bewertet:

| | |
|---|---|
| Note 1 | Film dispergiert gar nicht |
| Note 2 | Film dispergiert nur partiell |
| Note 3 | Film dispergiert langsam |
| Note 4 | Film dispergiert sofort |

### Wasserbeständigkeit des Zementfilms:

Aus gleichen Gewichtsteilen Zement und Dispersion (fest/fest) wurde ein Trockenmörtel bereitet, der durch Zugabe von Wasser in eine gebrauchsfertige Masse überführt wurde. Mit Hilfe eines Rakels wurde ein Zementfilm einer Schichtdicke von 500 µm gezogen, der 48 h bei Raumtemperatur getrocknet wurde. Auf diesen Zementfilm wurde mittels einer Pipette ein Wassertropfen aufgesetzt und das Filmweisen bzw. das Dispergieren unter Einwirkung durch Reiben mit dem Finger visuell beurteilt. Die Wasserbeständigkeit wurde mit folgendem Benotungsschema qualitativ bewertet:

| | |
|---|---|
| Note 1 | Film weist und dispergiert nicht |
| Note 2 | Film weist etwas aber dispergiert nicht |
| Note 3 | Film weist stark und dispergiert teilweise |
| Note 4 | Film dispergiert stark |
| Note 5 | Film dispergiert vollständig |

Zum Vergleich wurde als Vergleichsbeispiel 1 eine Polyvinylalkohol-stabilisierte Vinylacetat-Ethylen-Copolymerdispersion (Ethylengehalt: 11 %) und als Vergleichsbeispiel 2 eine Polyvinylalkohol-stabilisierte Vinylacetat-Ethylen-Copolymerdispersion (Ethylengehalt: 21 %) eingesetzt. Die Ergebnisse sind in der Tabelle zusammengefaßt. Die mit dem erfindungsgemäßen Verfahren erhaltenen Dispersionen zeigen sowohl im Dispersionsfilm als im Zementfilm eine gute Wasserbeständigkeit. Die Vergleichsbeispiele hingegen zeigen, daß die Polyvinylalkohol-stabilisierten Produkte sehr wasseranfällig sind.

**Tabelle:**

| Beispiel | Wasserbeständigkeit | |
|---|---|---|
| | Polymerfilm | Zementfilm |
| Bsp. 4 | 1 | 1 |
| Bsp. 5 | 1 | 1 |
| Bsp. 6 | 1 | 1 |
| Bsp. 7 | 1 | 1 |
| Vergl.bsp. 1 | 4 | 4 |
| Vergl.bsp. 2 | 4 | 4 |

## Patentansprüche

1. Verfahren zur Herstellung von Schutzkolloid-stabilisierten wässrigen Polymerdispersionen durch radikalische Polymerisation von ethylenisch ungesättigten Monomeren nach dem Emulsionspolymerisationsverfahren, dadurch gekennzeichnet, dass die Polymerisation in Gegenwart eines oder mehrerer Schutzkolloide durchgeführt wird, enthaltend
a) 20 bis 95 Gew% Sulfonsäure- oder Sulfonatgruppenhaltige Monomereinheiten,
b) 5 bis 80 Gew% Amid- oder Hydroxyalkylgruppenhaltige Monomereinheiten,
c) 0 bis 5 Gew% hydrophobe Monomereinheiten aus der Gruppe der wasserunlöslichen, ethylenisch ungesättigten Verbindungen.

2. Verfahren nach Anspruch 1, dadurch gekennzeichnet, dass in Gegenwart von Schutzkolloiden polymerisiert wird, mit
a) 40 bis 60 Gew% Monomereinheiten, welche sich von einem oder mehreren Monomeren aus der Gruppe 2-Acrylamido-2-methylpropansulfonsäure, Styrolsulfonsäure, (Meth-)Acrylsäure-Sulfoalkylester, Itaconsäure-Sulfoalkylester, vorzugsweise jeweils mit C₁- bis C₆-Alkylrest, Vinylsulfonsäure und deren Salze ableiten, und
b) 40 bis 60 Gew% Monomereinheiten, welche sich von Acrylamid und/oder Methacrylamid ableiten.

3. Verfahren nach Anspruch 1 bis 2, dadurch gekennzeichnet, dass ein oder mehrere Monomere aus der Gruppe der Vinylester von unverzweigten oder verzweigten Carbonsäuren mit 1 bis 18 C-Atomen, der Ester von Acrylsäure und Methacrylsäure mit unverzweigten oder verzweigten Alkoholen mit 1 bis 18 C-Atomen, der Vinylaromaten, der Vinylhalogenide und der Olefine polymerisiert werden.

4. Verwendung der nach Anspruch 1 bis 3 erhaltenen Schutzkolloid-stabilisierten Polymerdispersionen zur Herstellung von in Wasser redispergierbaren Polymerpulvern mittels Trocknung der Dispersionen.

5. Verwendung der nach Anspruch 1 bis 4 erhältlichen Polymerdispersionen und Polymerpulver als Bindemittel für Beschichtungen, Putze und Anstriche, als Klebstoffe oder Bindemittel für Holz, Papier, Textilien und Nonwovens, als Bindemittel bei der Papierherstellung und zur Herstellung von Preßmassen und Formkörper, als Bindemittel zur Verwendung in der Bauindustrie, insbesonders als Zusätze zu Beton, Bauklebern, Mörteln, Spachtelmassen und Verlaufsmassen.

## Claims

1. Process for preparing protective-colloid-stabilized aqueous polymer dispersions by free-radical polymerization of ethylenically unsaturated monomers by emulsion polymerization, characterized in that the polymerization is carried out in the presence of one or more protective colloids comprising
a) from 20 to 95% by weight of monomer units containing sulphonic acid groups or sulphonate groups,
b) from 5 to 80% by weight of monomer units containing amide groups or hydroxyalkyl groups, and
c) from 0 to 5% by weight of hydrophobic monomer units selected from the class consisting of water-insoluble ethylenically unsaturated compounds.

2. Process according to Claim 1, characterized in that the polymerization is carried out in the presence of protective colloids having
a) from 40 to 60% by weight of monomer units which derive from one or more monomers selected from the class consisting of 2-acrylamido-2-methylpropanesulphonic acid, styrenesulphonic acid, sulphoalkyl (meth)acrylates, sulphoalkyl itaconates, preferably in each case having a C₁-C₆-alkyl radical, vinylsulphonic acid and salts thereof, and
b) from 40 to 60% by weight of monomer units which derive from acrylamide and/or from methacrylamide.

3. Process according to Claims 1 and 2, characterized in that one or more monomers selected from the class consisting of vinyl esters of unbranched or branched carboxylic acids having from 1 to 18 carbon atoms, esters of acrylic and methacrylic acid with unbranched or branched alcohols having from 1 to 18 carbon atoms, vinylaromatics, vinyl halides and olefins are polymerized.

4. Use of the protective-colloid-stabilized polymer dispersions obtained according to Claims 1 to 3 for preparing water-redispersible polymer powders by drying the dispersions.

5. Use of the polymer dispersions and polymer powders obtainable according to Claims 1 to 4 as binders for coatings and renders, as adhesives or binders for wood, paper, textiles and nonwovens, as binders for papermaking and for producing moulding compositions and mouldings, as binders for use in the construction industry, in particular as additives to concrete, to construction adhesives, to mortars, to trowelling compositions and to levelling compositions.

## Revendications

1. Procédé de préparation de dispersions polymères aqueuses stabilisées par des colloïdes protecteurs, par polymérisation radicalaire de monomères éthyléniquement insaturés conformément au procédé de polymérisation en émulsion, caractérisé en ce que la polymérisation est réalisée en présence d'un ou de plusieurs colloïdes protecteurs, comprenant
a) de 20 à 95% en poids de motifs monomères renfermant des groupes acide sulfonique ou sulfonate,
b) de 5 à 80% en poids de motifs monomères renfermant des groupes amide ou hydroxyalkyle,
c) de 0 à 5% en poids de motifs monomères hydrophobes parmi le groupe constitué de composés éthyléniquement insaturés insolubles dans l'eau.

2. Procédé selon la revendication 1, caractérisé en ce que l'on procède à la polymérisation en présence de colloïdes protecteurs ayant
a) de 40 à 60% en poids de motifs monomères dérivés d'un ou de plusieurs monomères parmi le groupe constitué de l'acide 2-acrylamide-2-méthylpropanesulfonique, de l'acide styrènesulfonique, de (méth)acrylates de sulfoalkyle, d'itaconates de sulfoalkyle, chacun ayant de préférence un radical alkyle en C₁ à C₆, de l'acide vilnylsulfonique et de leurs sels, et
b) de 40 à 60% en poids de motifs monomères dérivés de l'acrylamide et/ou du méthacrylamide.

3. Procédé selon les revendications 1 à 2, caractérisé en ce que l'on polymérise un ou plusieurs monomères parmi le groupe constitué d'esters vinyliques d'acides carboxyliques non ramifiés ou ramifiés ayant de 1 à 18 atomes de carbone, d'esters de l'acide acrylique et de l'acide méthacrylique avec des alcools non ramifiés ou ramifiés ayant de 1 à 18 atomes de carbone, de vinylaromatiques, d'halogénures de vinyle et d'oléfines.

4. Utilisation des dispersions polymères stabilisées par des colloïdes protecteurs, obtenues selon les revendications 1 à 3, pour la préparation de poudres polymères redispersables dans l'eau par séchage des dispersions.

5. Utilisation des dispersions polymères et poudres polymères pouvant être obtenues selon les revendications 1 à 4, en tant que liants pour revêtements, enduits crépis et peintures, en tant qu'adhésifs ou liants pour bois, papier, textiles et non-tissés, en tant que liants pour la fabrication du papier et pour la production de compositions de moulage et de pièces moulées, en tant que liants destinés à une utilisation dans l'industrie de construction, en particulier en tant qu'additifs pour le béton, les adhésifs de construction, les mortiers, les mastics et les compositions d'égalisation.
